# EUROPEAN PATENT APPLICATION

(11) **EP 0 913 305 A1**
(43) Date of publication of application: **06.05.1999**
(21) Application number: 98307154.9
(22) Date of filing: 04.09.1998
(51) Int. Cl.: B60T 7/06

(54) **Vehicle foot pedals**

(30) Priority: 23.10.1997 GB 9722265
(71) Applicant: ROVER GROUP LIMITED, Warwick, Warwickshire CV34 6RG (GB)
(72) Inventor: Basnett, Michael Neil, Crickhowell, Powys NP8 1DS (GB)
(74) Representative: Wilson, Alan Stuart

(57) **Abstract**

A foot operable pedal 5 for a motor vehicle is described in which a heel brace 13 is pivotably connected near to one end of the lever 5 so as to prevent the passage of a heel 24 of a foot 11 of an operator of the pedal 5 from passing beneath a foot pad 12 connected to the lever 5. In this way the risk of damage to the foot 11 or ankle of the operator is reduced.

## Description

This invention relates to foot operable pedals and in particular to a brake pedal or clutch pedal of a motor vehicle.

It is a problem with a conventional brake or clutch pedal that in the event of the vehicle being involved in an accident when the driver is operating the pedal the heel of the drivers foot can be forced under the pedal causing over-extension and damage to the ankle.

It is an object of this invention to provide a solution to this problem.

GB 280 139 discloses a vehicle clutch pedal designed to avoid the problems of'riding the clutch', and having an arm pivotably depending from it and arranged to lie on the vehicle floor with the driver's foot resting on it. This is so that the weight of the driver's foot prevents the arm from moving forward under low loads, and thereby prevents accidental partial disengagement of the clutch.

According to the invention there is provided a motor vehicle having a foot operable pedal comprising an actuation portion arranged to be depressed by a driver's foot and a heel brace portion characterized in that the heel brace portion is arranged to move with the actuation portion when the actuation portion is depressed and arranged below the actuation portion so that if the ball of a driver's foot is on the actuation portion the heel brace portion will limit forward movement of the heel relative to the actuation portion.

The heel brace portion may be movable upwards relative to the actuation portion so as to allow the heel brace portion to lift clear of the floor of the vehicle as the pedal is depressed. Alternatively the heel brace and actuation portion may be formed as parts of a single rigid member such as a plate. In either case a depression may be formed in the floor of the vehicle beneath the pedal so as to receive the lower edge of the heel brace, thereby allowing full travel of the pedal.

The invention will now be described by way of example with reference to the accompanying drawing of which:-
Fig. 1 is a side view of a brake pedal of a vehicle according to a first embodiment of the invention;
Fig. 2 is a front view of the brake pedal of Fig. 1 in the direction of arrow 'F' on Fig. 1;
Fig. 3 shows a driver using the brake pedal of Fig. 1, and
Figure 4 is a side view of a brake pedal of a vehicle according to a second embodiment of the invention.

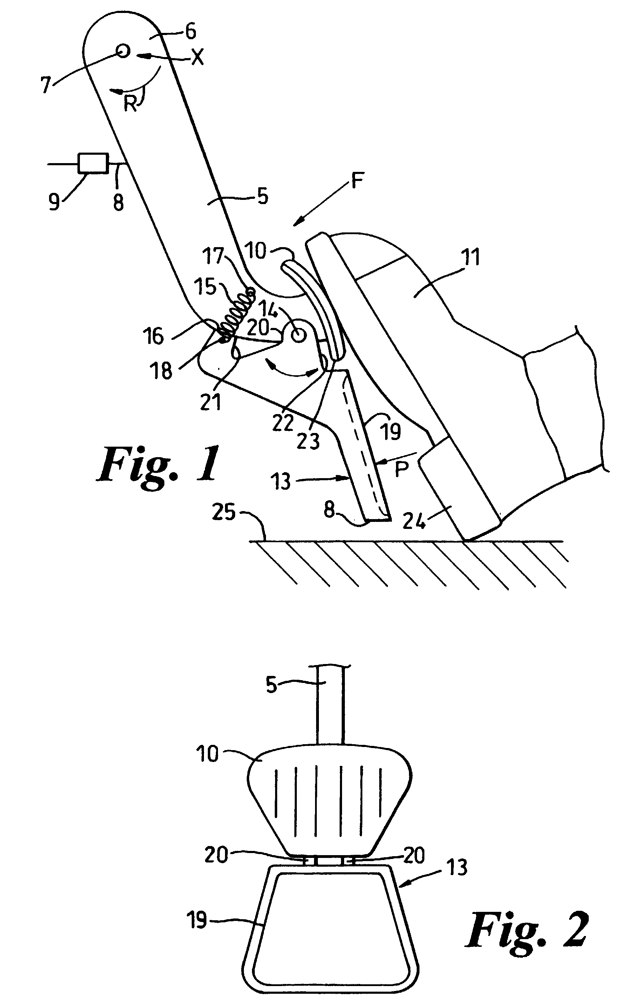

With reference to Figures 1 to 3 a foot operable brake pedal comprises lever 5 which is pivotably connected at its upper end 6 to part of the structure of a motor vehicle by means of a pivotable mounting 7. A push-rod 8 is connected to the lever 5 adjacent to the mounting 7 to connect the lever 5 to a hydraulic brake master cylinder 9 forming part of the hydraulic braking system of the vehicle. At its lower end the lever 5 has a foot pad 10 attached thereto through which a foot 11 of a driver of the motor vehicle can apply a load to the lever 5 to actuate the vehicle brakes.

A heel brace 13 is pivotably connected by means of a pivot pin 14 to the lever 5 adjacent to but offset from the position of attachment of the foot pad 12 to the lever.

The heel brace 13 comprises a depending support plate 19, a pair of spaced apart lugs 20 arranged for co-operation with the pivot pin 14 and a travel limit stop 21 having an abutment surface 16 for reaction against the lever 5. The support plate 19 and the stop 21 are spaced apart on opposite sides of a pivot axis extending through the pivot pin 14 so that the application of a force in the forward direction indicated by the arrow 'P' by a heel of the foot 11 will cause the heel brace 13 to be rotated in the forward direction (clockwise as shown) causing abutment of the surface 16 against the lever 11.

A biasing means in the form of a helical tension spring 15 is connected between an aperture 18 in the heel brace 13 and aperture 17 in the lever 5 to ensure that the heel brace 13 is maintained during normal use in the position shown in Fig. 1, in its forward most position with the stop 21 preventing further forward movement of the brace 13 relative to the foot pad 12. In this position the support plate 19 is angled relative to the foot pad 10 so that, when the drivers foot is at rest on the foot pad, not applying significant load, the support plate 19 is in front of the plane of the sole of the foot and the foot pad. Therefore, under normal use, the driver's foot is spaced from the heel brace and does not come into contact with it, so it will not affect the driver's normal use of the brake pedal. The gap between the lower edge of the heel brace 13 and the floor 25 of the vehicle is such that, under normal braking loads the heel brace does not come into contact with the floor.

In the event of the motor vehicle becoming involved in a frontal impact the driver 27 will tend to slide forwards in his seat 28 and his foot 11 will be urged forwards against the foot pad 12 and lever 5. Because this force is transmitted down through the driver's leg, it tends to push the heel 24 forwards. However due to the existence of the heel brace 13 it is not possible for a heel 24 of the foot 11 to pass under the lower edge 23 of the foot pad 12 as it will abut the support plate 19 preventing this from occurring. Any force 'P' applied by the heel 24 to the heel brace 13 in the forward direction will be resisted by abutment between the surface 16 and the lever 11 thereby ensuring that the support plate 19 remains substantially in the same plane as the foot pad 12. The heel brace 13 therefore acts as a rigid extension of the foot pad 10, moving forwards with the foot pad 10 in the same direction as it and remaining in the same fixed relationship to it. Therefore the whole pedal assembly supports the whole of the foot at an approximately constant angle as the pedal moves forwards. Assuming the loads on the leg 26 and the pedal to be relatively large during impact, i.e. higher than those produced by normal braking, the brake pedal will be depressed further than normal until the lower edge of the heel brace 13 contacts the floor 25. At this point the heel brace 13 will rotate upwards, rearwards relative to the foot pad 10, so that it does not become caught on the floor 25, and the brake pedal can continue to be depressed further thereby absorbing more of the impact energy.

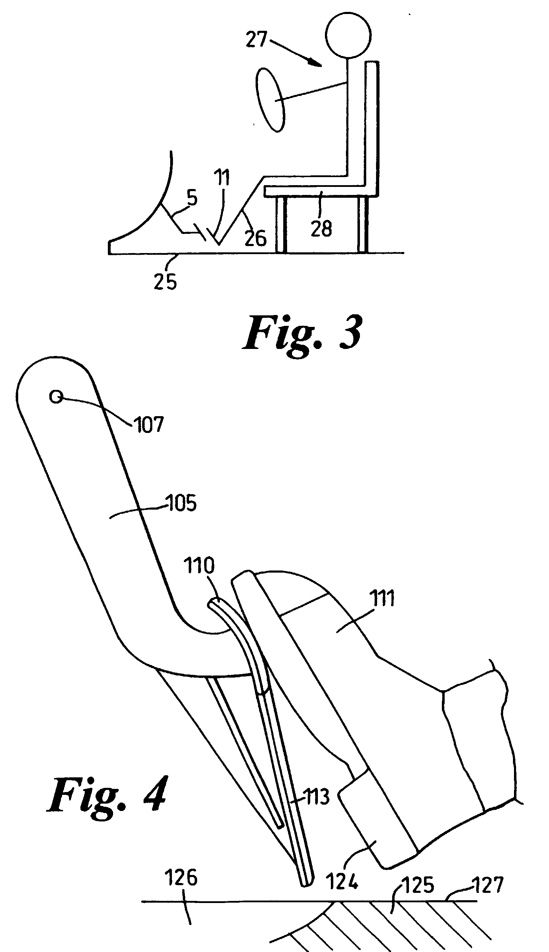

Referring to Figure 3, in a second embodiment of the invention the foot pad 110 and heel brace 113 are formed as portions of a continuous rigid plate and therefore cannot move relative to each other. The foot pad portion 110 is curved, being convex towards the driver, but lies approximately in a plane normal to its direction of travel, i.e. a plane passing through the pivot 107 of the pedal. The heel brace portion 113 is substantially planar extending from and joined to the lower edge of the foot pad portion 110. In this way, the foot pad portion 110 faces slightly more upwards than the heel brace portion 113, so that the heel brace portion 113 is in front of the plane of the foot pad portion 110, and therefore in front of the sole of the foot and spaced from it under normal operation of the pedal, as in the first embodiment. The brake pedal will therefore feel like a conventional pedal under normal braking conditions.

Under impact, the pedal of this embodiment operates in the same way as that of the first embodiment except that under high impact loads the heel brace portion 113 does not fold upwards, but continues to travel forwards with the foot pad portion 110, being received in a depression 126 in the floor 125 of the vehicle so that the pedal can be fully depressed with the lower edge of the heel brace portion 113 travelling below, and being let into, the main floor surface 127.

Whilst both of the embodiments described are brake pedals, it will be appreciated that the invention could also be applied to clutch pedals or even accelerator pedals.

## Claims

1. A motor vehicle having a foot operable pedal (5) comprising an actuation portion (12) arranged to be depressed by a driver's foot (11) and a heel brace portion (13) characterized in that the heel brace portion (13) is arranged to move with the actuation portion (12) when the actuation portion is depressed and arranged below the actuation portion so that if the ball of a driver's foot is on the actuation portion the heel brace portion will limit forward movement of the heel relative to the actuation portion.

2. A motor vehicle according to claim 1 characterized in that the heel brace portion (13) is arranged, when a load in the forward direction is applied to it, to act, at least over a range of travel of the pedal, as a rigid extension of the actuation portion (12).

3. A motor vehicle according to claim 1 or claim 2 characterized in that, under normal braking loads, the heel brace portion (13) is spaced from the floor of the vehicle.

4. A motor vehicle according to any foregoing claim characterized in that the heel brace portion (13) is movable upwards relative to the actuation portion (12) so as to allow the heel brace portion to lift clear of the floor (25) of the vehicle as the pedal is depressed.

5. A motor vehicle according to claim 4 characterized in that the heel brace portion (13) is pivotably mounted to allow it to rotate rearwards relative to the actuation portion (12) should the heel brace portion contact the floor (25), thereby to allow continued forward travel of the pedal after such contact.

6. A motor vehicle as claimed in claim 5 characterized in that the heel brace portion (13) is biased by a spring (15) towards a rearward end of its range of pivotal movement.

7. A motor vehicle according to claim 6 characterized in that the pedal further comprises stop means (21) arranged to prevent rotation of the heel brace portion (13) past the rearward end of its range of pivotal movement.

8. A motor vehicle according to any foregoing claim characterized in that the actuation portion (12) and heel brace portion (13) are arranged such that, during normal operation of the brake pedal, the driver's heel (24) will be spaced from the heel brace portion but that, if the driver slides forwards in his seat, his heel can come into contact with the heel brace portion.

9. A motor vehicle according to any foregoing claim further comprising a floor (125) beneath the pedal, characterized in that the floor has a depression (126) in it to allow travel of the lower edge of the heel brace portion (113) below the general level of the floor.

10. A motor vehicle according to any foregoing claim characterized in that the heel brace portion (13) is arranged to move forward with the actuation portion (112) in the same direction as it and remaining in the same fixed relationship to it, at least over a range of travel of the pedal.

11. A motor vehicle according to any foregoing claim characterized in that the pedal is a brake pedal arranged to actuate a braking system (9) of the vehicle.
